# EUROPÄISCHE PATENTSCHRIFT

(11) **EP 3 861 629 B1**
(45) Veröffentlichungstag und Bekanntmachung des Hinweises auf die Patenterteilung: **06.11.2024**
(21) Anmeldenummer: 19778463.0
(22) Anmeldetag: 23.09.2019
(51) Int. Cl.: H02P 5/74, H02P 21/24

(54) **MEHRMOTORENUMRICHTER UND VERFAHREN**
MULTI-MOTOR CONVERTER AND METHOD
CONVERTISSEUR MULTI-MOTEUR ET PROCÉDÉ

(30) Priorität: 01.10.2018 DE 102018124209
(43) Veröffentlichungstag der Anmeldung: 11.08.2021
(73) Patentinhaber: ebm-papst Mulfingen GmbH & Co. KG, 74673 Mulfingen (DE)
(72) Erfinder: SCHROTH, Sebastian, 74635 Kupferzell (DE); WIEDMANN, Georg, 74595 Langenburg (DE); STOLL, Benedikt, 74834 Elztal-Neckarburken (DE)
(74) Vertreter: Staeger & Sperling Partnerschaftsgesellschaft mbB
(86) Internationale Anmeldenummer: PCT/EP2019/075443
(87) Internationale Veröffentlichungsnummer: WO 2020/069888

(56) Entgegenhaltungen:
- DE-A1- 102013 001 564
- DE-A1- 102015 102 565
- JP-A- 2002 281 606
- KR-B1- 101 687 556

## Beschreibung

Die Erfindung betrifft einen sensorlosen Mehrmotorenumrichter zum Parallelbetrieb mehrerer Motoren sowie ein Regelungsverfahren zum Betreiben mehrerer Motoren an einem gemeinsamen Mehrmotorenumrichter.

Zum sensorlosen bzw. rotorlagegeberfreien Betrieb eines elektrisch kommutierten Motors (PMSM / EC-Motor) an einem Umrichter werden in der Regel die an den Klemmen des Motors angelegten Spannungen sowie die in den Motorphasen fließenden Ströme in geeigneter Art und Weise erfasst und ausgewertet, um die Rotorlage zu bestimmen und den Motor entsprechend zu kommutieren. Im Stand der Technik ist aber keine zufriedenstellende Lösung bekannt, um zwei oder mehrere solcher Motoren (PMSM IEC-Motor) an einem einzigen Umrichter zu betreiben. Wenn in der nachfolgenden Beschreibung von Motoren gesprochen wird, sind sensorlos gesteuerte PMSM-Motoren bzw. sensorlos geregelte EC-Motoren gemeint.

Druckschriftlicher Stand der Technik im vorliegenden technischen Gebiet ist in den Dokumenten KR 101 687 556 B1, JP 2002 281 606 A, DE 10 2013 001 564 A1 und DE 10 2015 102 565 A1 offenbart.

Es ist daher Aufgabe der vorliegenden Erfindung eine effiziente Lösung zum Betreiben mehrerer Motoren an einem Umrichter bereit zu stellen, die sich kostengünstig realisieren und möglichst universell einsetzen lässt.

Die Erfindung wird anhand der Merkmale von Anspruch 1 und Anspruch 7 gelöst.

Eine Grundidee der Erfindung besteht darin, dass zum rotorlagegeberfreien Parallelbetrieb mehrerer, wenigstens zweier, elektrisch kommutierter Motoren an einem gemeinsamen Umrichter für jeden der angeschlossenen Motoren eine separate Erfassung der Phasenströme erfolgt. Darüber hinaus wird jedoch nur eine einzige Spannungserfassung je Umrichterausgangsphase benötigt, da durch den Parallelbetrieb der Motoren, an allen Motoren dieselbe Klemmenspannung anliegt. Alternativ ist auch denkbar, dass die Klemmenspannung nicht erfasst, sondern aus den vom Controller ausgegebenen Aussteuergraden berechnet werden kann.

Ein wesentlicher Unterschied des erfindungsgemäßen Mehrmotoren-Umrichters zu einem herkömmlichen Umrichter besteht in der Erfassung und Verarbeitung der Messsignale zur Rotorlagebestimmung von mehreren Motoren, wobei hierzu für jeden am Mehrmotorenumrichter angeschlossenen Motor eine separate Stromerfassung erfolgt.

Ein weiterer Aspekt betrifft die Ermittlung des dreiphasigen Summenstroms I_{uvw} aus den Phasenströmen der einzelnen Motoren.

Erfindungsgemäß wird hierzu ein Steuerungssystem umfassend einen Mehrmotorenumrichter zum gesteuerten Parallelbetrieb einer Anzahl an n EC-Motoren M1, ..., Mn bereit gestellt, deren jeweilige Rotorlage jeweils sensorlos erfasst wird, wobei n ≥ 2 ist, umfassend wenigstens eine Erfassungseinrichtung zur Ermittlung wenigstens der Rotorlagen und Drehzahlen der n EC-Motoren mit Hilfe der zuvor gemessener Phasenströme I_{M1}, .., I_{Mn} und der Klemmenspannung U_{u,v,w} der n EC-Motoren. Das Steuerungssystem weist ferner eine Regelungs- und Transformationseinrichtung auf, um mit Hilfe der ermittelten Rotorlagen und der Drehzahlen zur Regelung der n-Motoren entsprechende Spannungsgrößen und Stromgrößen im d-q-Koordinatensystem (Raumzeigersystem) zu generieren sowie eine der Regelungs- und Transformationseinrichtung nachgeschaltete weitere Regelungseinrichtung, der die von der vorgeschalteten Regelungs- und Transformationseinrichtung ausgegebenen Spannungsgrößen und Stromgrößen zugeführt werden, um daraus Schaltbefehle für den Mehrmotorenumrichter zum Betrieb der n Motoren zu generieren.

Erfindungsgemäß erfolgt ein gesteuerter Betrieb mittels eines Stromphasenreglers. Hierzu weist die weitere Regelungseinrichtung einen Stromphasenregler auf.

Gemäß einem nicht-erfindungsgemäßen Konzept, erfolgt ein feldorientierter Betrieb mittels eines d-q-Stromreglers. Hierzu weist die weitere Regelungseinrichtung einen d-q-Stromregler auf.

In einer bevorzugten Ausgestaltung der Erfindung ist es vorgesehen, dass die Erfassungseinrichtung wenigstens eine Messeinrichtung zum sensorlosen Erfassen der jeweiligen Phasenströme I_{M1}, .., I_{Mn} der n EC-Motoren sowie eine Einrichtung zur Ermittlung der Summenströme I_{uvw} der n Phasenströme I_{M1}, .., I_{Mn} aufweist.

Eine bevorzugte Ausgestaltung sieht vor, dass die Erfassungseinrichtung Einrichtungen zum Schätzen oder Beobachten bzw. Bestimmen wenigstens der Rotorlagen ϕM1,..., ϕMn und der jeweiligen Drehzahl ω_{M1},..., ω_{Mn} der n Motoren sowie eine Einrichtung zum Bestimmen einer theoretischen bzw. geschätzten Rotorlage ϕu und Drehzahl wu ermittelt aus dem Summenstrom I_{uvw} und der Klemmenspannung U_{u,v,w} aufweist.

Es ist weiter mit Vorteil vorgesehen, dass die Regelungs- und Transformationseinrichtung einen Clarke-Park-Transformator zum Transformieren von wenigstens den erfassten dreiphasigen Größen Rotorlage ϕu und Summenstrom I_{uvw} in eine d-q-Stromgröße I_{d,q_ist} in Raumzeigerdarstellung für die Regelungseinrichtung aufweist. Dabei ergibt sich dq_ist aus der Messung der Summenströme luvw und dem geschätzten Winkel ϕu.

In einer ebenfalls vorteilhaften Ausgestaltung (im Falle der Stromphasenregelung) der Erfindung ist vorgesehen, dass die Regelungs- und Transformationseinrichtung einen Stabilisierungsregler und einen Drehzahlregler zum Bereitstellen der Spannungsgrößen U_{d_SOLL}, U_{q_SOLL} mit dem d-Anteil U_{d} ermittelt aus den Rotorlagen und Drehzahlen der n Motoren sowie dem q-Anteil Uq vom Drehzahlregler aus den Drehzahlwerten ω_{Soll}, ω_{U} für den Stromphasenregler aufweist. Die Drehzahl der Anordnung wird geschätzt. Die geschätzte Drehzahl entspricht regelmäßig der Drehzahl der beiden Motoren, kann aber auch dynamisch davon abweichen (abweichend von den einzeln geschätzten Drehzahlen RLM1 und RLM2 der beiden Motoren, für den Fall von zwei Motoren). U_{d_SOLL} ergibt sich aus den geschätzten Größen.

Weiter ist mit Vorteil für den Fall der Stromphasenregelung vorgesehen, dass die Regelungseinrichtung ferner einen Clarke-Park-Transformator aufweist, um die vom Stromphasenregler erhaltenen Spannungsgrößen U_{d,q} in Raumzeigerdarstellung mittels Clarke-Park-Transformation in eine dreiphasige Spannungsgröße U_{uvw} zu transformieren und diese mittels eines PWM-Modulators in Schaltsignale für den Umrichter zu wandeln.

In dem Fall der nicht-erfindungsgemäßen feldorientierten d-q-Regelung ist vorgesehen, dass die Regelungs- und Transformationseinrichtung einen oder mehrere Stabilisierungsregler und einen Drehzahlregler zum Bereitstellen der Stromgrößen I_{d_SOLL}, I_{q_SOLL} mit dem d-Anteil I_{d_SOLL} ermittelt aus den geschätzten Rotorlagen und Drehzahlen der n Motoren sowie dem q-Anteil I_{q_SOLL} ermittelt aus den Drehzahlwerten ω_{Soll}, ω_{U} für den d-q-Stromregler aufweist.

In dem Fall der nicht-erfindungsgemäßen feldorientierten Reglung ist weiter mit Vorteil vorgesehen, dass die Regelungseinrichtung einen Clarke-Park-Transformator aufweist, um die in Raumzeigerdarstellung vom d-q-Stromregler erhaltenen Spannungsgrößen U_{d,q} mittels Clarke-Park-Transformation in eine dreiphasige Spannungsgröße U_{uvw} zu transformieren und diese mittels eines PWM-Modulators in Schaltsignale für den Umrichter umzuwandeln.

Die Ausgestaltung des Rotorlageschätzers kann gemäß einer bekannten Variante erfolgen, wie diese z. B. in der DE 102015102565 A1 beschrieben ist.

Ein weiterer Aspekt der vorliegenden Erfindung betrifft ein Verfahren zum Betreiben von n EC-Motoren (mit n≥2, d. h. mit wenigstens zwei EC-Motoren) im Parallelbetrieb an einem gemeinsamen Mehrmotorenumrichter insbesondere mit einem wie zuvor beschriebenen Steuerungssystem mit den folgenden Schritten:
a. Erfassen der einzelnen Phasenströme I_{M1}, .., I_{Mn} und der Klemmenspannung U_{u,v,w} der n EC-Motoren,
b. Ermittlung der Rotorlagen und Drehzahlen der n EC-Motoren mit Hilfe der zuvor gemessener Phasenströme I_{M1}, .., I_{Mn} und der Klemmenspannung U_{u,v,w} der der n EC-Motoren,
c. Generieren und Übermitteln von Strom- und/oder Spannungsgrößen in einer Raumzeigerdarstellung bzw. in d-q-Raumzeigerkoordinaten mit Hilfe der zuvor ermittelten Rotorlagen und der Drehzahlen an die Regelungseinrichtung,
d. Ausrichten der Spannungsgrößen in Raumzeigerdarstellung durch eine Winkelbestimmung mittels des Stromphasenreglers (R_{ST}) der Regelungseinrichtung (30);
e. Generieren von dreiphasigen Spannungsgrößen U_{uvw} mittels einer Clarke-Park-Transformation aus den Strom- und/oder Spannungsgrößen in Raumzeigerdarstellung und Weitergabe dieser an einen Modulator und
f. Generieren von Schaltbefehlen daraus mittels des Modulators aus den Spannungsgrößen U_{uvw} für den Mehrmotorenumrichter zum Betrieb der n EC-Motoren.

Erläuterungen zur begrifflichen Terminologie:
Theoretische Drehzahl ωᵤ:
   Mit ωᵤ wird die theoretische Drehzahl w des Umrichters bezeichnet, was die Frequenz bezeichnet, mit dem das vom Umrichter ausgegebene Drehspannungssystem U_{uvw} rotiert.
Theoretische Rotorlage ϕᵤ:
   Als Kommutierungswinkel ist der Winkel ϕᵤ und demnach die theoretische Rotorlage bezeichnet. Da dieser Winkel einem mittleren Winkel aller Motoren entspricht (je nach Gewichtung der einzelnen Motoren) handelt es sich nicht um einen realen, sondern einen theoretischen Winkel.

d-q-Stromgröße I_{d,q_IST}:
An dieser Stelle wird der Summenstrom aller Motoren mit dem

Kommutierungswinkel ϕᵤ Ldes Umrichters [wie zuvor bereits erläutert] in eine fiktive Stromgröße I_{d,q_IST} transformiert. Diese ist zwangsläufig fiktiv, da es durch mehrere Motoren mit unterschiedlichen möglichen Rotorlagen in Summe keinen eindeutig bestimmbaren feldorientierten Betriebsstrom gibt demnach nur als Regelgröße bezogen auf den fiktiven Kommutierungswinkel.

d-q-Spannungsgröße U_{u,q}:
Auch die Spannungsgrößen Du und Uq des Regelungssystems sind natürlich fiktive Größen bezogen auf den gemessenen Summenstrom aller Motoren und werden demnach bei der Regelung als fiktive Größen verwendet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Regelsystem gemäß einer ersten Ausführungsform der Erfindung ausgebildet zur Stromphasenregelung,
- Fig. 2: ein Regelsystem gemäß einer nicht-erfindungsgemäßen Ausführungsform ausgebildet zur feldorientierten Regelung,
- Fig. 3: Drehmomentverlaufskurven der beiden Motoren M1 und M2 im gesteuerten Betrieb,
- Fig. 4: Drehzahlverlaufskurven im gesteuerten Betrieb,
- Fig. 5: Schätzfehler im gesteuerten Betrieb,
- Fig. 6: feldorientierter Stromverlauf im gesteuerten Betrieb,
- Fig. 7: Winkeldifferenz zwischen den beiden Motoren im gesteuerten Betrieb,
- Fig. 8: Drehmomentverlaufskurven der beiden Motoren M1 und M2 im feldorientierten Betrieb,
- Fig. 9: Drehzahlverlaufskurven im feldorientierten Betrieb,
- Fig. 10: Schätzfehler im feldorientierten Betrieb,
- Fig. 11: feldorientierter Stromverlauf im feldorientierten Betrieb,
- Fig. 12: Winkeldifferenz zwischen den beiden Motoren im feldorientierten Betrieb,
- Fig. 13: ein Ersatzschaltbild eines Drehzahlreglers,
- Fig. 14: ein Ersatzschaltbild des d,q-Stromreglers,
- Fig. 15: ein Ersatzschaltbild eines Stabilisierungsreglers und
- Fig. 16: ein Ersatzschaltbild eines Stromphasenreglers.

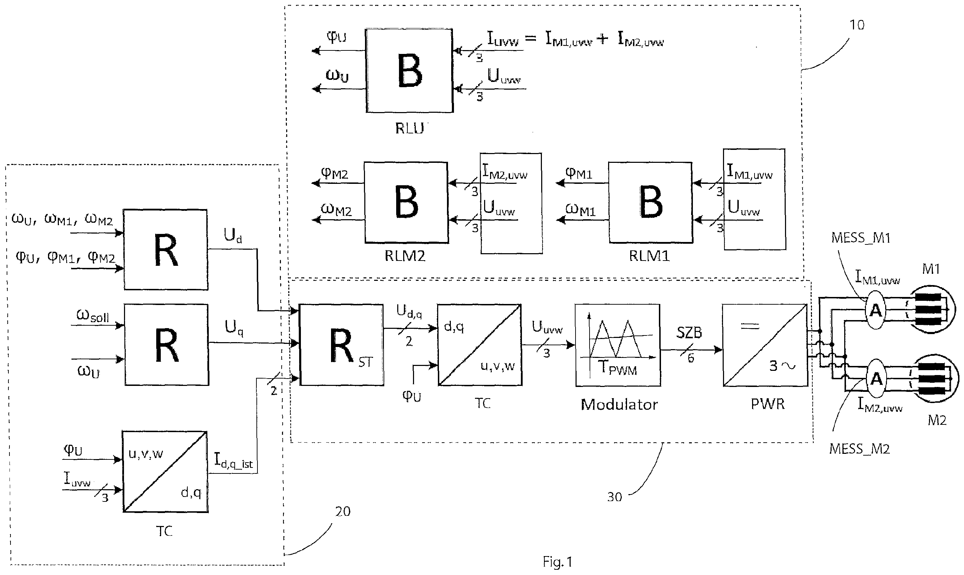

Im Folgenden wird die Erfindung anhand einer Ausführungsform mit Bezug auf die Figur 1 näher erläutert, wobei gleiche Bezugszeichen in den Figuren auf gleiche strukturelle und/oder funktionale Merkmale hinweisen.

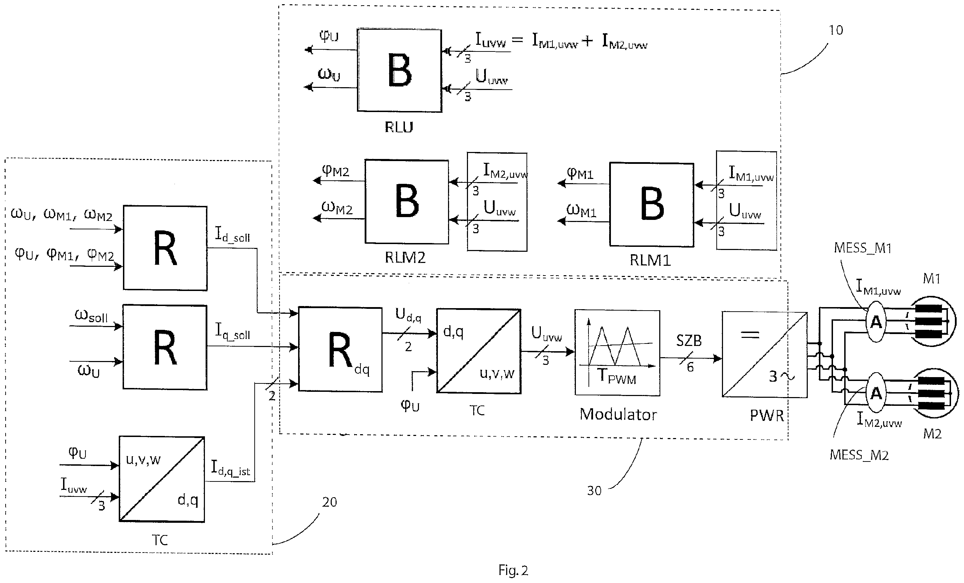

Die beiden Ausführungsformen gemäß den Figuren 1 und 2 zeigen jeweils ein Regelsystem 1 umfassend einen Mehrmotorenumrichter PWR zum geregelten Parallelbetrieb einer Anzahl an n EC-Motoren M1, M2, (hier mit n =2) dargestellt, deren jeweilige Rotorlage jeweils sensorlos erfasst wird.

Hierzu ist eine Erfassungseinrichtung 10 zur Ermittlung wenigstens der Rotorlagen und Drehzahlen der beiden EC-Motoren (M1, M2) mit Hilfe der zuvor gemessener Phasenströme I_{M1}, I_{M2} und der Klemmenspannung U_{u,v,w} der beiden EC-Motoren vorgesehen. Die Erfassungseinrichtung 10 ist ferner ausgebildet die theoretische Rotorlage (pu und den Summenstrom I_{uvw} zu erhalten, wobei der Summenstrom I_{uvw} = I_{M1} + I_{M2} ist und als Eingangsgröße für die Ermittlung der Größen Rotorlage ϕ_{U} und Drehzahl ω_{U} neben der Klemmenspannung U_{uvw} verwendet wird.

Somit weist die Erfassungseinrichtung 10 die Einrichtungen RLM1, RLM2 auf, die zum Bestimmen oder Schätzen wenigstens der Rotorlagen ϕM1, ϕM2 und der jeweiligen Drehzahl ω_{M1}, ω_{M2} der beiden Motoren M1, M2 ausgebildet sind sowie eine weitere Einrichtung RLU zum Bestimmen oder schätzen einer theoretischen Rotorlage ϕ_{U} und Drehzahl ω_{U} ermittelt aus dem Summenstrom I_{uvw} und der Klemmenspannung U_{u,v,w}.

Ferner ist in beiden Ausführungsformen eine Regelungs- und Transformationseinrichtung 20 vorgesehen, um mit Hilfe der ermittelten Rotorlagen und der Drehzahlen zur Regelung der beiden Motoren entsprechende Spannungsgrößen und Stromgrößen im d-q-Koordinatensystem zu generieren. Hierzu ist ebenfalls in beiden Ausführungsformen eine der Regelungs- und Transformationseinrichtung 20 nachgeschaltete Regelungseinrichtung 30 vorgesehen, der die von der Regelungs- und Transformationseinrichtung 20 jeweils ausgegebenen Spannungsgrößen U_{d}, U_{q} und Stromgrößen I_{d,q_ist} bzw. im Fall der feldorientierten Regelung die Stromgrößen I_{d_IST}, I_{q_IST} und die Stromgrößen I_{d,q_ist} zugeführt werden, um daraus Schaltbefehle SZB für den Mehrmotorenumrichter PWR zumBetrieb der beiden Motoren zu generieren.

Die Regelungs- und Transformationseinrichtung 20 weist einen Clarke-Park-Transformator TP zum Transformieren von den erfassten dreiphasigen Grö-βen Rotorlage ϕ_{U} und Summenstrom I_{uvw} in eine d-q-Stromgröße I_{d,q_ist} in Raumzeigerdarstellung für die Regelungseinrichtung 30 auf.

Die Figur 1 zeigt demnach einen lediglich schematischen Aufbau der Regelung mit zwei Motoren, wozu drei sensorlose Rotorlagebestimmungen RLM1, RLM2, RLU vorgesehen sind. Der Drehzahlregler R bestimmt hier die gestellte Spannung in q-Richtung und der Stabilisierungsregler R die gestellte Spannung in d-Richtung jeweils bezogen auf das Referenz-Koordinatensystem des Umrichters PWR. Der Stromphasenregler R_{ST} sorgt durch eine Winkelbestimmung aus der Messung der Summenphasenströme für die korrekte Ausrichtung der gestellten Spannungen in d-q-Richtung. Per Clarke-Park-Transformation und anschließendem PWM-Modulator werden dann die Schaltbefehle SZB auf den Umrichter PWR gegeben.

Das System gemäß Figur 1 wird vorzugsweise zuerst bis zur (frei definierbaren) Grenzdrehzahl von rund 100 U/min hochgeschleppt. Dabei sind der Drehzahlregler R, Stabilisierungsregler R, der Stromphasenregler R_{ST} sowie die Rotorlagebestimmungen RLM1, RLM2, RLU deaktiviert bzw. die entsprechenden Regelschleifen offen. Mit Erreichen der frei definierbaren Grenzdrehzahl werden dann alle Regelschleifen geschlossen.

Die Rotorlagebestimmungen RLM1, RLM2, RLU benötigen nun eine gewisse Zeit, bis sie "eingeschwungen" sind. Auffällig kann dies vor allem in den feldorientierten Stromverläufen sowie im geschätzten Drehzahlverlauf des Umrichters aufgezeigt werden. Nach ungefähr 0,4s ist das System vollständig eingeschwungen d. h. stabil. Zum späteren Zeitpunkt (z. B. t = 0,7s bei einem beispielhaften Ausführungsbeispiel) findet ein Lastsprung statt, welcher das System wieder anregt. Die genannten Regler reagieren auf die gemessenen Abweichungen und führen das System auf einen eingeschwungenen Zustand zurück.

In der nicht-erfindungsgemäßen Ausführung nach der Figur 2 bei der eine feldorientierte Regelung vorgesehen ist, ist hierzu in der Regelungseinrichtung 30 ein d-q-Stromregler R_{dq} vorgesehen.

Der Drehzahlregler R bestimmt hier den Soll-Strom in q-Richtung und der Stabilisierungsregler den Soll-Strom in d-Richtung (jeweils bezogen auf das Referenz-Koordinatensystem des Umrichters). Der unterlagerte feldorientierte Stromregler R_{dq} ermittelt nun durch Vergleich mit den gemessenen Summenphasenströme I_{d,q_IST} die gewünschten Spannungen U_{d,q} in d-q-Richtung. Per Clarke-Park-Transformation und anschließendem PWM-Modulator werden dann die Schaltbefehle SZB auf den Mehrmotorenumrichter PWR gegeben.

Wie ebenfalls in den Figuren 1 und 2 zu sehen ist, umfasst die Erfassungseinrichtung 10 eine Messeinrichtung A zum sensorlosen Erfassen der jeweiligen Phasenströme I_{M1}, I_{M2} der beiden EC-Motoren M1, M2 sowie der Summenströme I_{uvw} der beiden Phasenströme.

Die Regelungseinrichtung 30 gemäß Figur 1 weist ferner einen Clarke-Park-Transformator TC auf, um die vom Stromphasenregler R_{ST} erhaltenen Spannungsgrößen U_{d,q} in Raumzeigerdarstellung mittels Clarke-Park-Transformation in eine dreiphasige Spannungsgröße U_{uvw} zu transformieren und diese mittels eines PWM-Modulators PWM in Schaltsignale SZB für den Umrichter PWR umzuwandeln.

Die Regelungs- und Transformationseinrichtung 20 umfasst bei der nicht-erfindungsgemäßen Ausführung nach Figur 2 einen Stabilisierungsregler R und einen Drehzahlregler R zum Bereitstellen der Stromgrößen I_{d_SOLL}, I_{q_SOLL} mit dem d-Anteil I_{d_SOLL} ermittelt aus den Rotorlagen und Drehzahlen der beiden Motoren sowie dem q-Anteil I_{q_SOLL} ermittelt aus den Drehzahlwerten ω_{Soll} , ω_{U} für den d-q-Stromregler R_{dq}. Ferner weist die Regelungseinrichtung 30 einen Clarke-Park-Transformator TC auf, um die in Raumzeigerdarstellung vom d-q-Stromregler R_{dq} erhaltenen Spannungsgrößen U_{d,q} mittels Clarke-Park-Transformation in eine dreiphasige Spannungsgröße U_{uvw} zu transformieren und diese mittels des PWM-Modulators PWM in Schaltsignale SZB für den Umrichter PWR umzuwandeln.

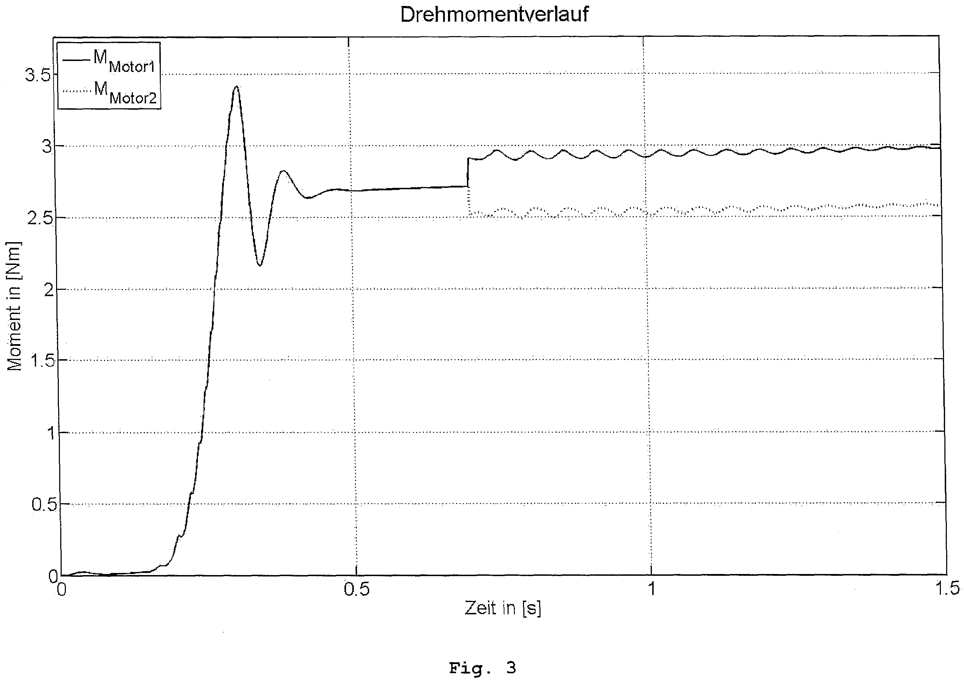

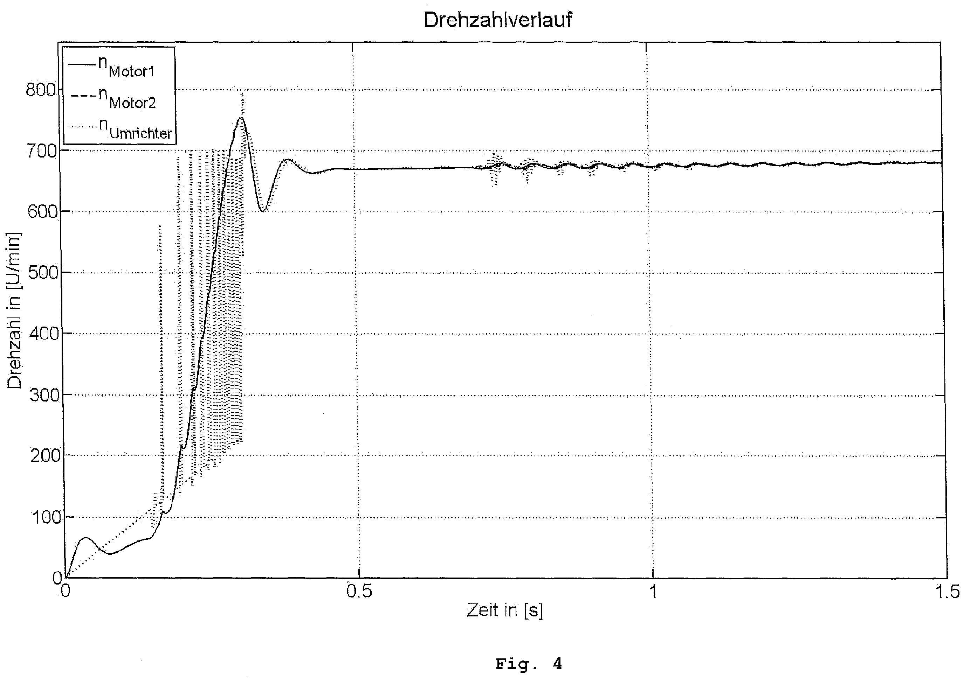

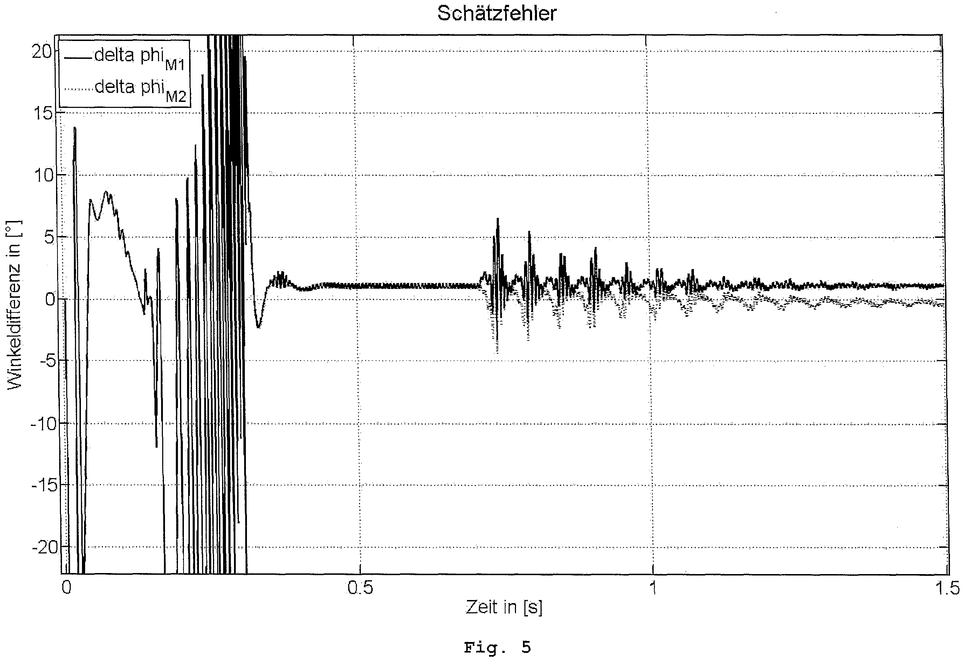

Die Figuren 3 bis 7 zeigen einen beispielhaften Betrieb beim Einsatz der Multimotor-Regelung im gesteuerten Betrieb. Das System wird zuerst bis zur Grenzdrehzahl von rund 100 U/min hochgeschleppt. Dabei sind Drehzahlregler, Stabilisierungsregler, Stromphasenregler sowie die Rotorlagebestimmungen zunächst deaktiviert.

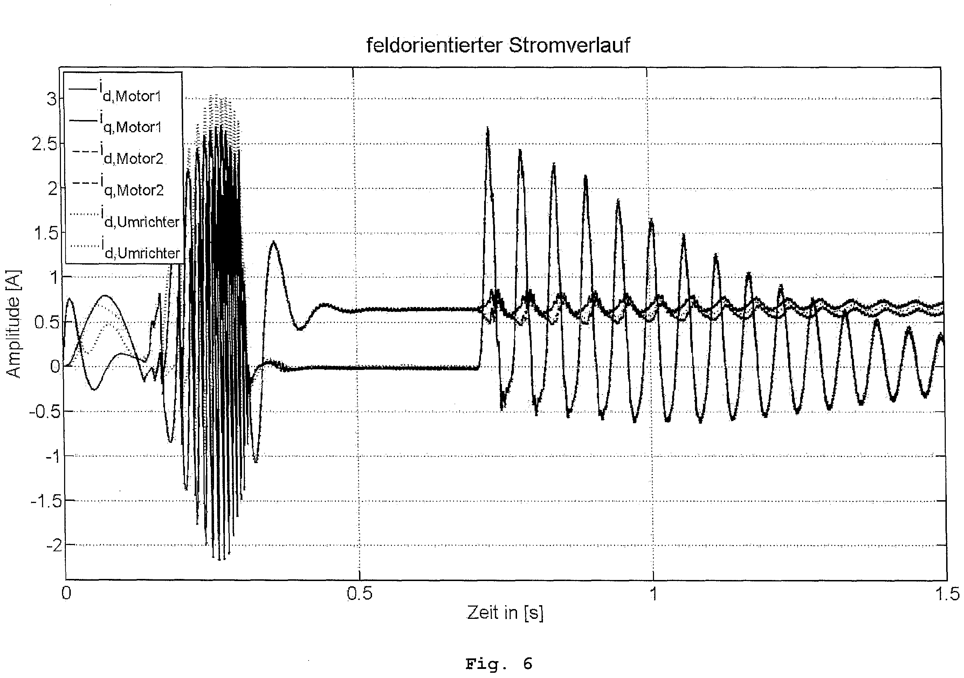

Mit Erreichen der frei definierbaren Grenzdrehzahl werden alle Regelschleifen geschlossen. Die Lagebestimmungen benötigen nun eine gewisse Zeit, bis sie eingeschwungen sind. Auffällig wird dies vor allem in den feldorientierten Stromverläufen (siehe Figur 6) sowie im geschätzten Drehzahlverlauf des Umrichters (siehe Figur 2). Nach ungefähr 0,4s ist das System vollständig eingeschwungen. Zum Zeitpunkt von etwa t=0,7s findet ein Lastsprung statt, welcher das System wieder anregt. Die Regler reagieren auf die gemessenen Abweichungen und führen das System auf den eingeschwungenen Zustand zurück.

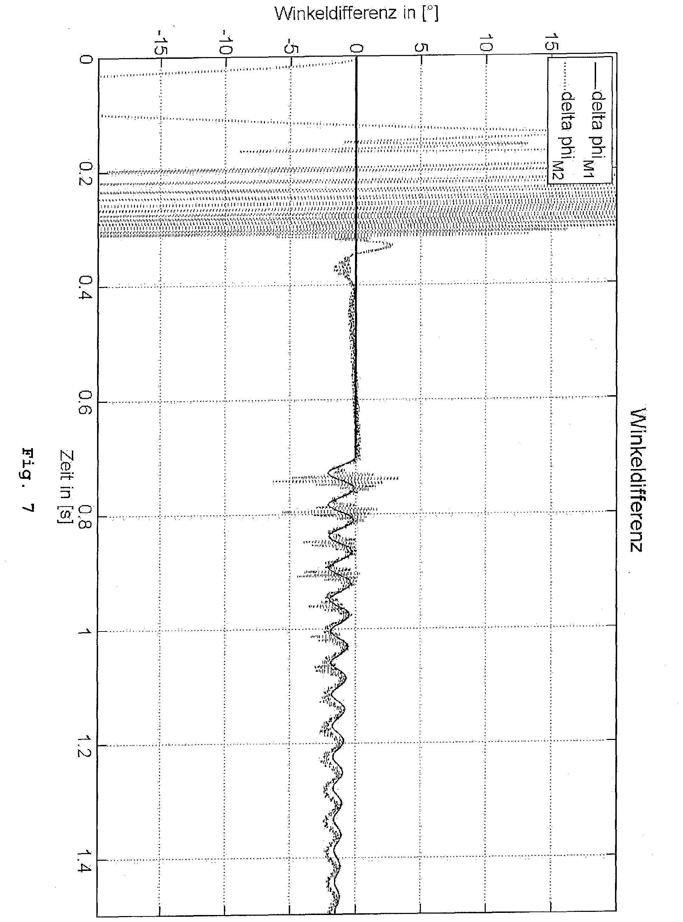

Im Diagramm zur Winkeldifferenz (siehe Figur 7) ist die Differenz zwischen geschätztem Kommutierungswinkel des Umrichters und realen Drehwinkeln der Motoren M1 und M2 zu sehen. Vor dem Lastsprung ergibt sich im eingeschwungenen Zustand eine Winkeldifferenz von nahe Null. Nach dem Lastsprung bei etwa 0,7 s ergibt sich eine Abweichung (Winkeldifferenz) von rund zwei Grad.

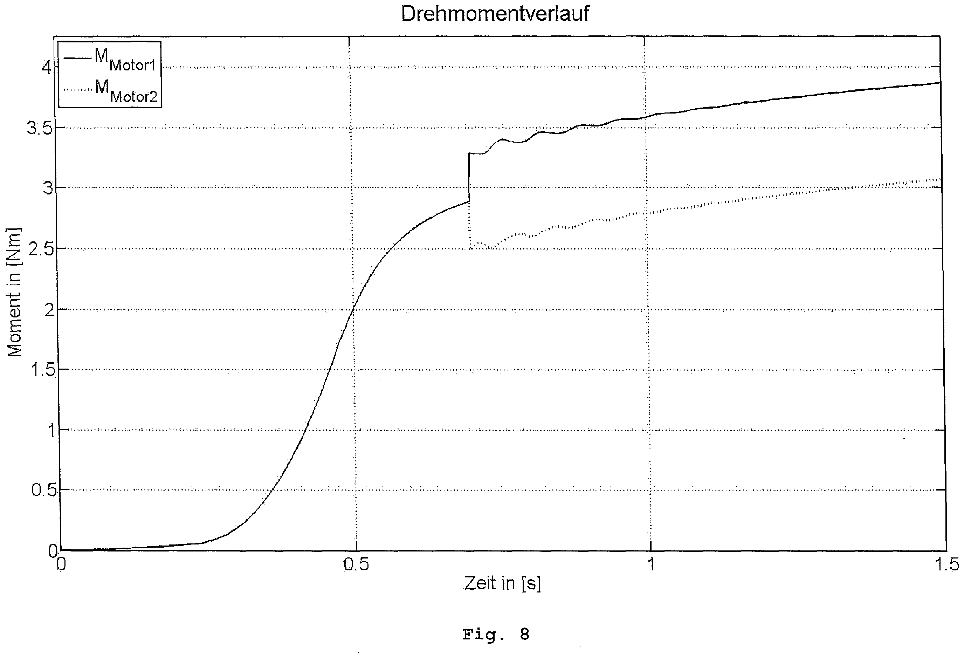

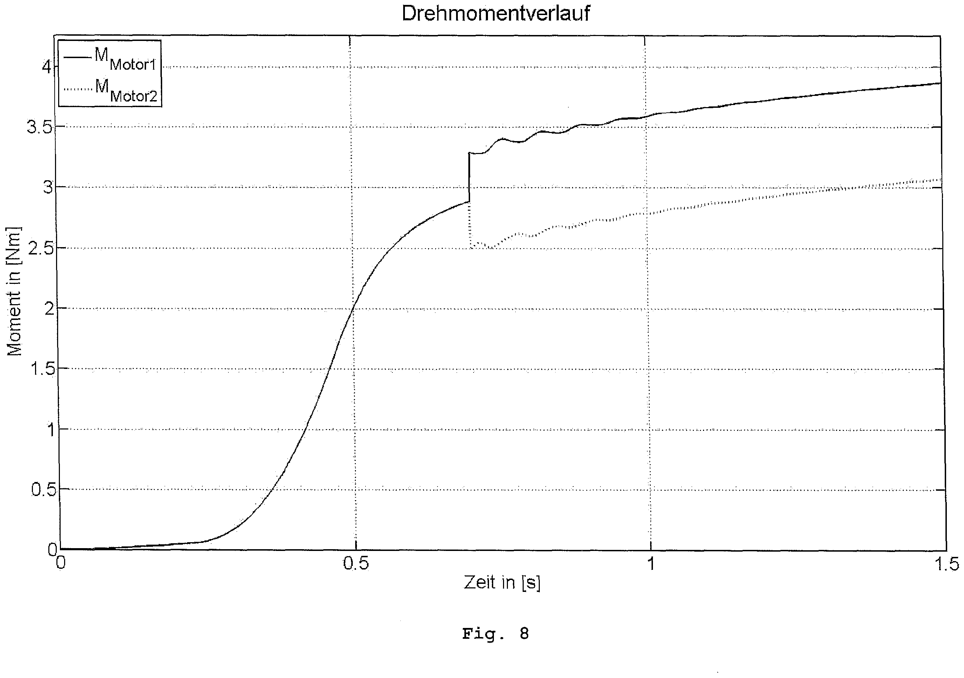

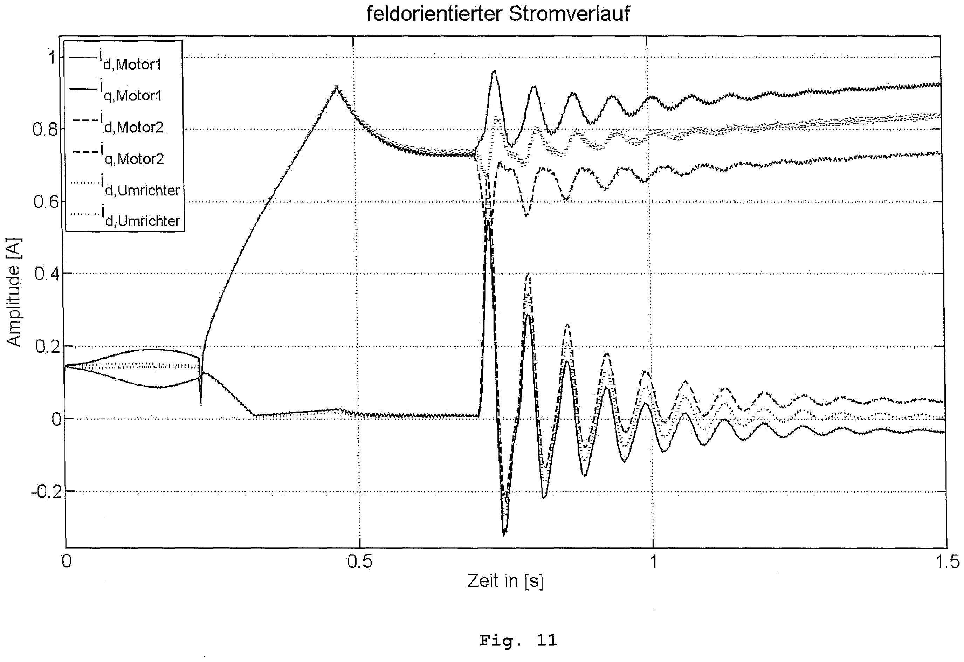

Die Figuren 8 bis 12 zeigen das Systemverhalten beim Einsatz der Multimotor-Regelung für den Betrieb mit Hilfe einer FOC (feldorientierte Steuerung). Auch hier wird das System zuerst bis zur Grenzdrehzahl von rund 100 U/min hochgeschleppt.

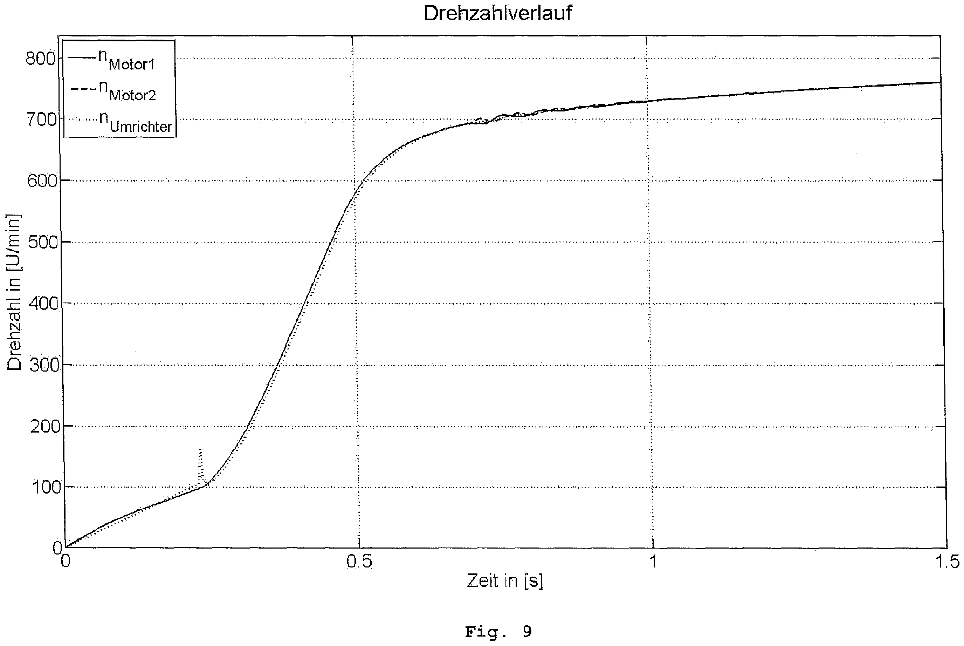

Dabei sind Drehzahlregler, Stabilisierungsregler sowie die Rotorlagebestimmungen deaktiviert. Mit Erreichen der frei definierbaren Grenzdrehzahl werden alle Regelschleifen geschlossen. Das System ist hier relativ schnell eingeschwungen. Man sieht lediglich einen kurzen Peak in der geschätzten Drehzahl des Umrichters (siehe Figur 9). Zum Zeitpunkt etwa t=0,7s findet ein Lastsprung statt, welcher das System wieder anregt.

Die Regler reagieren auf die gemessenen Abweichungen und führen das System auf einen eingeschwungenen Zustand zurück. Auch hier wird der eingeschwungen Zustand relativ schnell wieder hergestellt.

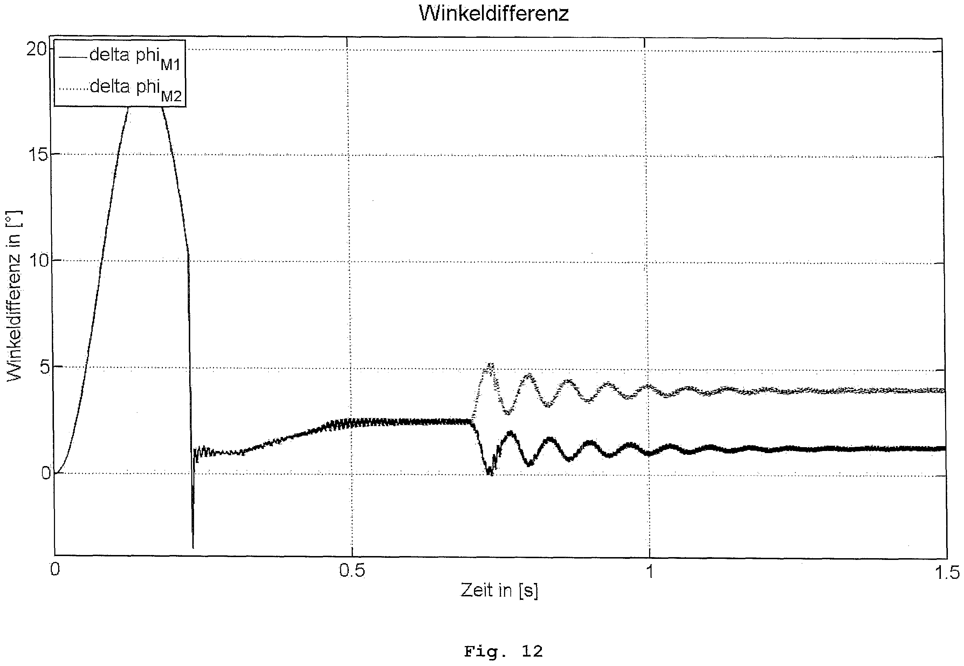

Im Diagramm zur Winkeldifferenz in der Figur 12 ist die Differenz zwischen geschätztem Kommutierungswinkel des Umrichters und den realen Drehwinkeln der Motoren M1 und M2 zu sehen. Vor dem Lastsprung ergibt sich im eingeschwungenen Zustand eine Winkeldifferenz von ungefähr 2,5°. Dies liegt daran, dass eine Parameterabweichung von 20% für die Motoren M1 und M2 vorgegeben wurde. Nach dem Lastsprung ergibt sich eine Abweichung von zwei bzw. vier Grad in der Winkeldifferenz. Dies liegt im zu erwartenden Bereich, da sich durch die nun unterschiedlichen Belastungen die Koordinatensysteme der Motoren und des Umrichters weiter gegeneinander verdrehen.

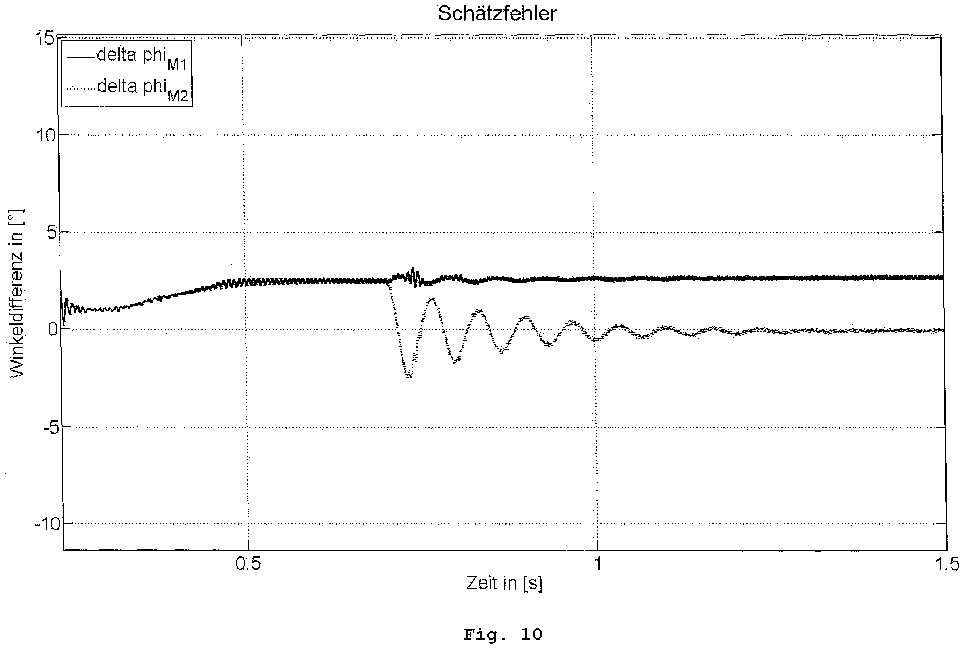

Im Diagramm zum Schätzfehler in der Figur 10 ist der jeweils aktuelle Schätzfehler zwischen realen Drehwinkel des Motors und geschätztem Drehwinkel des Motors aufgetragen. Vor dem Lastsprung liegt der Schätzfehler bei rund 2 Grad.

Nach dem Lastsprung erreicht der schwächer belastete Motor M1 einen Schätzfehler von nahezu Null, während sich beim stärker belasteten Motor M2 der Schätzfehler quasi nicht verändert.

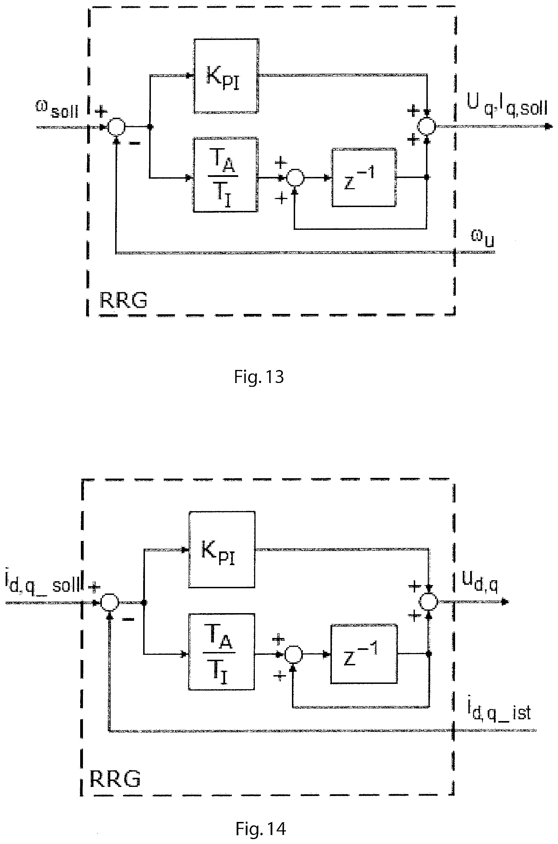

In der Figur 13 ist ein Ersatzschaltbild eines Drehzahlreglers gezeigt. Dieser ist in Form eines herkömmlichen PI-Reglers aufgebaut. Dabei wird die vom sensorlosen Rotorlageschätzer ermittelte Ist-Drehzahl ωu mit der
z.B. von einer Steuerungssoftware vorgegebener Solldrehzahl ω_{SOLL} verglichen und die Differenz auf den PI-Regler gegeben. Dieser ermittelt dann an seinem Ausgang je nach Regelungstopologie den Sollstrom I_{q,soll} bzw. die zu stellende Spannung U_{q} in q-Richtung.

In der Figur 14 ist ein Ersatzschaltbild eines Stromreglers gezeigt. Dieser ist in Form eines herkömmlichen PI-Reglers aufgebaut. Dabei wird der gemessene Summenstrom I_{d,q_IST} aller Motoren mit dem vom überlagerten Drehzahlregler ermittelten Sollstrom I_{d,Soll}, I_{q, SOLL} verglichen und die Differenz auf den PI-Regler gegeben. Dieser ermittelt dann an seinem Ausgang die zu stellende Spannungen U_{d,q} in d- bzw. q-Richtung.

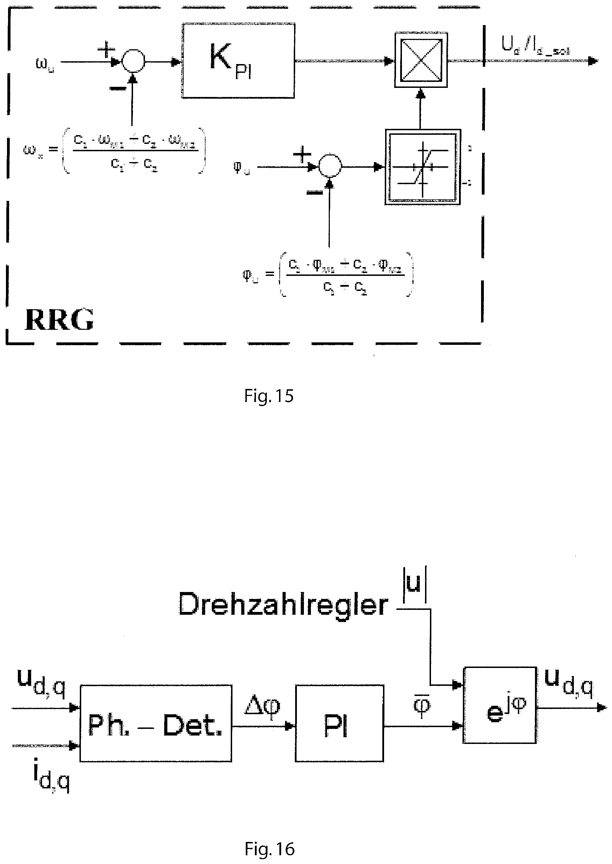

In der Figur 15 ist ein Ersatzschaltbild eines Stabilisierungsreglers gezeigt. Es gibt prinzipiell eine Vielzahl an denkbaren AusführungsVarianten für einen Stabilisierungsregler. Eine vorteilhafte Variante wäre z.B. die Ermittlung einer d-Komponente abhängig von der absoluten Größe der Drehzahldifferenz. Eine weitere mögliche Variante ist oben abgebildet. Dabei wird die Drehzahl mit welcher das Umrichterkoordinatensystem rotiert mit den geschätzten und anschließend geeignet gewichteten Drehzahlen der Motoren [hier beispielhaft zwei Motoren] verglichen und auf einen P-Regler gegeben. Der Ausgang des P-Reglers wird dann multipliziert mit einer auf die gleiche Art und Weise ermittelten Winkeldifferenz. Diese Winkeldifferenz wird begrenzt auf einen Wertebereich zwischen 1 und -1.

Die Fig. 16 zeigt ein Ersatzschaltbild eines Stromphasenreglers und dessen Funktionsweise. Ein Baustein des Stromphasenreglers ist ein Phasendetektor. Dies er ermittelt aus den eingelesenen und anschließend transformierten Phasenströmen den Winkelfehler bezogen auf den gewünschten d-Stromanteil. Der anschließende PI-Regler ist dafür verantwortlich den notwendigen mittleren Phasenoffset einzuregeln und die gewünschten d- und q-Anteile im Strom zu erhalten. Der PI-Regler ist genauso aufgebaut wie die zuvor beschriebenen Strom- und Drehzahlregler.

## Patentansprüche

1. Regelsystem (1) umfassend einen Mehrmotorenumrichter (PWR) zum gesteuerten Parallelbetrieb einer Anzahl an n EC-Motoren (M1, ..., Mn), deren jeweilige Rotorlage jeweils sensorlos erfasst wird, wobei n ≥ 2, umfassend
a. wenigstens eine Erfassungseinrichtung zur Ermittlung wenigstens der Rotorlagen und Drehzahlen der n EC-Motoren (M1, ..., Mn) mit Hilfe der zuvor gemessener Phasenströme I_{M1}, .., I_{Mn} und optional der Klemmenspannung U_{u,v,w} der n EC-Motoren (M1, ..., Mn),
b. eine Regelungs- und Transformationseinrichtung (20) um mit Hilfe der ermittelten Rotorlagen und der Drehzahlen zur Regelung der n-Motoren entsprechende Spannungsgrößen und Stromgrößen im d-q-Koordinatensystem zu generieren,
c. eine der Regelungs- und Transformationseinrichtung (20) nachgeschaltete Regelungseinrichtung (30), der die von der Regelungs- und Transformationseinrichtung (20) ausgegebenen Spannungsgrößen und Stromgrößen zugeführt werden, um daraus Schaltbefehle (SZB) für den Mehrmotorenumrichter zum Betrieb der n Motoren zu generieren, **dadurch gekennzeichnet, dass** die Regelungseinrichtung (30) einen Stromphasenregler (R_{ST}) aufweist.

2. Regelsystem (1) gemäß Anspruch 1, **dadurch gekennzeichnet, dass** die Erfassungseinrichtung wenigstens eine Messeinrichtung (A) zum sensorlosen Erfassen der jeweiligen Phasenströme I_{M1}, .., I_{Mn} der n EC-Motoren (M1, ..., Mn) aufweist.

3. Regelsystem (1) gemäß Anspruch 2 **dadurch gekennzeichnet, dass** die Erfassungseinrichtung (10) Bestimmungseinrichtungen (RLM1,..., RLMn) zum Bestimmen oder Schätzen wenigstens der Rotorlagen ϕM1,..., ϕMn und der jeweiligen Drehzahl ω_{M1},..., ω_{Mn} der n Motoren (M1, ..., Mn) sowie eine Bestimmungseinrichtung zum Bestimmen einer theoretischen Rotorlage ϕ_{U} und Drehzahl wu ermittelt aus dem Summenstrom I_{uvw} und der Klemmenspannung U_{u,v,w} aufweist.

4. Regelsystem (1) gemäß einem der Ansprüche 1 bis 3, **dadurch gekennzeichnet, dass** die Regelungs- und Transformationseinrichtung (20) einen Clarke-Park-Transformator (TP) zum Transformieren von wenigstens den dreiphasigen Größen Rotorlage ϕ_{U} und Summenstrom I_{uvw} in eine d-q-Stromgröße I_{d,q_ist} in Raumzeigerdarstellung für die Regelungseinrichtung (30) aufweist.

5. Regelsystem (1) gemäß einem der Ansprüche 1 bis 4, **dadurch gekennzeichnet, dass** die Regelungs- und Transformationseinrichtung (20) einen Stabilisierungsregler (R) zum Bereitstellen der Spannungsgrößen U_{d}, U_{q} mit dem d-Anteil U_{d} ermittelt aus den Rotorlagen und Drehzahlen der n Motoren sowie dem q-Anteil Uq ermittelt aus den Drehzahlwerten ω_{Soll} , ω_{U} für den Stromphasenregler (R_{ST}) aufweist.

6. Regelsystem (1) gemäß einem der Ansprüche 1 bis 5, **dadurch gekennzeichnet, dass** die Regelungseinrichtung (30) einen Clarke-Transformator (TC) aufweist, um die vom Stromphasenregler (RST) erhaltenen Spannungsgrößen U_{d,q} in Raumzeigerdarstellung mittels Clarke-Park-Transformation in eine dreiphasige Spannungsgröße U_{uvw} zu transformieren und diese mittels eines PWM-Modulators (PWM) in Gleichspannungs-Schaltsignale (SZB) für den Umrichter (PWR) zu wandeln.

7. Verfahren zum Betreiben von n EC-Motoren mit n≥2 im Parallelbetrieb an einem gemeinsamen Mehrmotorenumrichter (PWR) mit einem Regelsystem (1) gemäß einem der Ansprüche 1 bis 6, mit den folgenden Schritten:
a. Erfassen der einzelnen Phasenströme I_{M1}, .., I_{Mn} und optional der Klemmenspannung U_{u,v,w} der der n EC-Motoren (M1, ..., Mn),
b. Ermittlung der Rotorlagen und Drehzahlen der n EC-Motoren (M1, ..., Mn) mit Hilfe der zuvor gemessener Phasenströme I_{M1}, .., I_{Mn} und der Klemmenspannung U_{u,v,w} der der n EC-Motoren (M1, ..., Mn),
c. Generieren und Übermitteln von Strom- und/oder Spannungsgrö-ßen in einer Raumzeigerdarstellung mit Hilfe der ermittelten Rotorlagen und der Drehzahlen an die Regelungseinrichtung (30),
d. Ausrichten der Spannungsgrößen in Raumzeigerdarstellung durch eine Winkelbestimmung mittels des Stromphasenreglers (R_{ST}) der Regelungseinrichtung (30);
e. Generieren von dreiphasigen Spannungsgrößen U_{uvw} mittels einer Clarke-Park-Transformation aus den Strom- und/oder Spannungsgrößen in Raumzeigerdarstellung und Weitergabe dieser an einen Modulator (PWM);
f. Generieren von Schaltbefehlen (SZB) mittels des Modulators (PWM) aus den Spannungsgrößen U_{uvw} für den Mehrmotorenumrichter (PWR) zur Steuerung des Betriebs der n EC-Motoren.

## Claims

1. A control system (1) comprising a multi-motor converter (PWR) for controlled parallel operation of a number of n EC motors (M1, ..., Mn), the respective rotor position of which being acquired without a sensor, where n ≥ 2, comprising
a. at least one acquisition means for determining at least the rotor positions and rotational speeds of the n EC motors (M1, ..., Mn) with the aid of the previously measured phase currents I_{M1,...,} I_{Mn} and optionally the terminal voltage U_{u,v,w} of the n EC motors (M1, ..., Mn);
b. a control and transformation means (20) in order to generate corresponding voltage variables and current variables in the d-q coordinate system with the aid of the determined rotor positions and the rotational speeds for controlling the n motors;
c. a control means (30) downstream of the control and transformation means (20), to said control means the voltage variables and current variables generated by the control and transformation means (20) are supplied in order to generate switching commands (SZB) therefrom for the multi-motor converter in order to operate the n motors, **characterized in that** the control means (30) has a current-phase controller (R_{ST})..

2. The control system (1) according to claim 1, **characterized in that** the acquisition means has at least one measuring means (A) for the sensorless acquisition of the respective phase currents I_{M1,...,} I_{Mn} of the n EC motors (M1, ..., Mn).

3. The control system (1) according to claim 2, **characterized in that** the acquisition means (10) has determining means (RLM1,..., RLMn) for determining or estimating at least the rotor positions ϕM1,..., ϕMn and the respective rotational speed ω_{Mn1,...,} ω_{Mn} of the n motors (M1, ..., Mn) as well as a determining means for determining a theoretical rotor position ϕ_{U} and rotational speed ω_{U} determined from the total current I_{uvw} and the terminal voltage U_{u,v,w}.

4. The control system (1) according to any of claims 1 to 3, **characterized in that** the control and transformation means (20) has a Clarke-Park transformation (TP) to transform at least the three-phase variables of rotor position ϕ_{U} and total current I_{uvw} into a d-q current variable I_{d,q_actual} in the space-vector representation for the control means (30).

5. The control system (1) according to any of claims 1 to 4, **characterized in that** the control and transformation means (20) has a stabilizing controller (R) in order to provide the voltage variables U_{d}, U_{q} with the d portion U_{d} determined from the rotor positions and rotational speeds of the n motors as well as the q portion Uq determined from the rotational speed values ω_{target}, ω_{U} for the current-phase controller (R_{ST}).

6. The control system (1) according to any of claims 1 to 5, **characterized in that** the control means (30) has a Clarke-Park transformation (TC) in order to transform the voltage variables U_{d,q} in the space-vector representation obtained by the current-phase controller (RST) into a three-phase voltage variable U_{uvw} by means of the Clarke-Park transformation and to convert this variable into direct-voltage switching signals (SZB) for the converter (PWR) by means of a PWM modulator (PWM).

7. A method for operating n EC motors, where n ≥ 2, in parallel operation on a shared multi-motor converter (PWR) having a control system (1) according to any of claims 1 to 6, with the following steps:
a. acquiring the individual phase currents I_{M1,...,} I_{Mn} and optionally the terminal voltage U_{u,v,w} of the n EC motors (M1, ..., Mn);
b. determining the rotor positions and rotational speeds of the n EC motors (M1, ..., Mn) with the aid of the previously measured phase currents I_{M1,...,} I_{Mn} and the terminal voltage U_{u,v,w} of the n EC motors (M1, ..., Mn);
c. generating and transmitting current and/or voltage variables in a space-vector representation to the control means (30) with the aid of the determined rotor positions and the rotational speeds;
d. aligning the voltage variables in space vector representation by angle determination by means of the current phase controller (R_{ST}) of the control means (30);
e. generating three-phase voltage variables U_{uvw} from the current and/or voltage variables in the space-vector representation by means of a Clarke-Park transformation and transmission of same to a modulator (PWM);
f. generating switching commands (SZB) from the voltage variables U_{uvw} for the multi-motor converter (PWR) by means of the modulator (PWM) in order to control operation of the n EC motors.

## Revendications

1. Système de régulation (1), comprenant un convertisseur multimoteur (PWR) pour un fonctionnement en parallèle commandé d'un nombre n de moteurs à commutation électronique (EC) (M1, ... Mn) dont la position de rotor est détectée respectivement sans capteur, où n ≥ 2, comprenant
a) au moins un dispositif de détection pour établir au moins les positions de rotor et les vitesses de rotation des n moteurs EC (M1, ..., Mn) à l'aide des courants de phase I_{M1}, ... I_{Mn} mesurés précédemment, et en option de la tension aux bornes U_{U,V,W} des n moteurs EC (M1, ..., Mn),
b) un dispositif de régulation et de transformation (20) afin de générer à l'aide des positions de rotor et des vitesses de rotation établies des grandeurs de tension et des grandeurs de courant correspondantes dans le système de coordonnées d-q pour réguler les n moteurs,
c) un dispositif de régulation (30) placé en aval du dispositif de régulation et de transformation (20) et auquel sont amenées les grandeurs de tension et les grandeurs de courant sorties par le dispositif de régulation et de transformation (20) afin de générer à partir de celles-ci des ordres de commutation (SZB) pour le convertisseur multimoteur pour faire fonctionner les n moteurs,
**caractérisé en ce que** le dispositif de régulation (30) présente un régulateur de phase (R_{ST}).

2. Système de régulation (1) selon la revendication 1, **caractérisé en ce que** le dispositif de détection présente au moins un dispositif de mesure (A) pour détecter sans capteur les courants de phase I_{M1}, ..., I_{Mn} respectifs des n moteurs EC (M1, ..., Mn).

3. Système de régulation (1) selon la revendication 2, **caractérisé en ce que** le dispositif de détection (10) présente des dispositifs de détermination (RLM1, ..., RLMn) pour déterminer ou estimer au moins les positions de rotor (ϕM1, ..., ϕMn) et la vitesse de rotation ωM1, ..., ωMn respective des n moteurs (M1, ..., Mn), ainsi qu'un dispositif de détermination pour déterminer une position de rotor théorique ϕ_{U} et la vitesse de rotation ω_{U} établies à partir du courant total luvw et de la tension aux bornes U_{U,V,W}.

4. Système de régulation (1) selon l'une quelconque des revendications 1 à 3, **caractérisé en ce que** le dispositif de régulation et de transformation (20) présente un transformateur Clarke-Park (TP) pour transformer au moins les grandeurs triphasées position de rotor ω_{U} et courant total luvw en une grandeur de courant d-q I_{d,q_ist} dans une représentation vectorielle spatiale pour le dispositif de régulation (30).

5. Système de régulation (1) selon l'une quelconque des revendications 1 à 4, **caractérisé en ce que** le dispositif de régulation et de transformation (20) présente un régulateur de stabilisation (R) pour fournir les grandeurs de tension U_{d}, U_{q} avec la composante d U_{d} qui est établie à partir des positions de rotor et des vitesses de rotation des n moteurs ainsi qu'avec la composante q U_{q} établie à partir des valeurs de vitesse de rotation ω_{Soll} pour le régulateur de phase (R_{ST}).

6. Système de régulation (1) selon l'une quelconque des revendications 1 à 5, **caractérisé en ce que** le dispositif de régulation (30) présente un transformateur Clarke (TC) pour transformer les grandeurs de tension U_{d,q} obtenues du régulateur de phase (R_{ST}) en représentation vectorielle spatiale au moyen d'une transformation de Clarke et de Park en une grandeur de tension triphasée U_{UVW} et pour convertir celles-ci au moyen d'un modulateur PWM (PWM) en signaux de commutation de tension continue (SZB) pour le convertisseur (PWR).

7. Procédé permettant de faire fonctionner n moteurs EC, où n ≥ 2, en fonctionnement parallèle sur un convertisseur multimoteur (PWR) commun avec un système de régulation (1) selon l'une quelconque des revendications 1 à 6, comprenant les étapes suivantes consistant à :
a) détecter les courants de phase I_{M1}, ..., I_{Mn} individuels et en option la tension aux bornes U_{U,V,W} des n moteurs EC (M1, ..., Mn),
b) établir les positions de rotor et les vitesses de rotation des n moteurs EC (M1, ..., Mn) à l'aide des courants de phase I_{M1}, ..., I_{Mn} mesurés précédemment et de la tension aux bornes U_{U,V,W} des n moteurs EC (M1, ..., Mn),
c) générer des grandeurs de courant et/ou de tension dans une représentation vectorielle spatiale à l'aide des positions de rotor et des vitesses de rotation établies et les transmettre au dispositif de régulation (30),
d) aligner les grandeurs de tension en représentation vectorielle spatiale par une détermination d'angle au moyen du régulateur de phase (R_{ST}) du dispositif de régulation ;
e) générer des grandeurs de tension U_{UVW} triphasées au moyen d'une transformation de Clarke et de Park à partir des grandeurs de courant et/ou de tension en représentation vectorielle spatiale et les retransmettre à un modulateur (PWM) ;
f) générer des ordres de commutation (SZB) au moyen du modulateur (PWM) à partir des grandeurs de tension U_{UVW} pour le convertisseur multimoteur (PWR) afin de commander le fonctionnement des n moteurs EC.
